# EUROPEAN PATENT APPLICATION

(11) **EP 2 765 696 A1**
(43) Date of publication of application: **13.08.2014**
(21) Application number: 12838412.0
(22) Date of filing: 28.08.2012
(51) Int. Cl.: H02M 3/28, H02H 7/20

(54) **SWITCHING POWER SUPPLY CIRCUIT WITH PROTECTIVE FUNCTION**

(30) Priority: 05.10.2011 JP 2011220664
(71) Applicant: I-O Data Device, Inc., Kanazawa-shi Ishikawa 920-8512 (JP)
(72) Inventor: SAKA Takashi, Kanazawa-shi Ishikawa 920-8512 (JP)
(74) Representative: Reichert & Lindner Partnerschaft Patentanwälte
(86) International application number: PCT/JP2012/071642
(87) International publication number: WO 2013/051351

(57) **Abstract**

A switching power supply circuit includes: a transformer (104) having a primary winding (N1), a secondary winding (N2) and a tertiary winding (N3); a primary-side rectifying-and-smoothing circuit (103) that converts AC power to DC power then smoothes it; a secondary-side rectifying-and-smoothing circuit (106) that smoothes secondary-side power; a tertiary-side rectifying-and-smoothing circuit (107) that smoothes power from the tertiary winding; a switching circuit (108) that switches the primary winding; a pulse width control circuit (109) that controls the switching of the switching circuit; an output-error detecting circuit (110) that detects a deviation of a secondary-side DC output voltage from a reference voltage; and a ripple-voltage detecting-and-controlling circuit (171) that detects a ripple-voltage of the secondary-side DC output voltage and stop-controls the output-error detecting circuit, wherein a stop-control signal from the ripple-voltage detecting-and-controlling circuit causes the output-error detecting circuit to stop outputting, then a drive signal to the switching circuit is stopped, thus the operation of the switching power supply circuit is stopped.

## Description

### TECHNICAL FIELD

The present invention relates to a technique for detecting a deterioration of an electrolytic capacitor used for a smoothing circuit provided in a switching power supply device, and avoiding a disruptive accident in advance.

### BACKGROUND OF THE INVENTION

In a switching power supply device, an electrolytic capacitor used for a smoothing circuit gradually deteriorates due to the repeated charging and discharging of high-current and/or aging. Then, when such an electrolytic capacitor is continuously used beyond its life, the electrolytic capacitor may deteriorate to cause a disruption of the switching power supply device, which may result in a smoke or a fire accident.

In this regard, several studies have been made for a switching power supply circuit from a circuitry perspective, for a technique of detecting a deterioration of an electrolytic capacitor and copng therewith.

For example, a technique is disclosed in Patent Document 1 such that an increase of Equivalent Series Resistance (ESR) caused by a deterioration of an electrolytic capacitor is detected based on a voltage difference across both ends of a smoothing coil in the positive-side wiring of DC power that is rectified and smoothed at the secondary side of a transformer provided in a switching power supply circuit, and the detection result is fed back to a primary side circuit via a photo coupler dedicated to this detection circuit.

### PRIOR ART DOCUMENTS

### Patent Documents

1: Japanese Patent Application Publication No. 2000-032747

### SUMMARY OF THE INVENTION

### Problems to be solved

However, conventional solutions for detecting a disruption of a switching power supply device caused by a deterioration of an electrolytic capacitor have not necessarily been enough to solve all the problems.

Besides, the technique disclosed in Patent Document 1 additionally needs a ripple-voltage detecting circuit using a transistor, as well as a dedicated photo coupler, and further a circuit needs to be modified to accommodate those, thus causing a cost increase and requiring a relatively large circuit space for the solution.

It is therefore an objective of the present invention to provide a low cost switching power supply device, just by adding a simple circuit, with functions of detecting a deterioration of an electrolytic capacitor in a smoothing circuit and avoiding a possible disruptive accident due to the deterioration of the electrolytic capacitor.

### Solution to Problems

In order to solve the aforesaid problems and achieve the objective of the present invention, an aspect of the present invention is configured as follows.

That is, a switching power supply circuit with protective function according to the present invention prevents a disruption of a switching power supply device due to a deterioration of an electrolytic capacitor and includes: a transformer having a primary winding, a secondary winding and a tertiary winding; a primary-side rectifying circuit that converts AC power to DC power; a primary-side electrolytic capacitor that smoothes the DC power outputted from the primary-side rectifying circuit; a secondary-side rectifying circuit that converts AC power outputted from the secondary winding of the transformer to DC power; a secondary-side electrolytic capacitor that smoothes the DC power outputted from the secondary-side rectifying circuit; a tertiary-side rectifying and smoothing circuit that converts AC power outputted from the tertiary winding of the transformer to DC power and smoothes the DC power; a switching circuit that repeatedly switches the primary winding of the transformer which inputs a voltage of the primary-side electrolytic capacitor; a pulse width control circuit that controls the pulse width of a drive signal for controlling the switching of the switching circuit; an output-error detecting circuit that detects a deviation of a secondary-side DC output voltage outputted by the secondary-side rectifying circuit and the secondary-side electrolytic capacitor from a predetermined reference voltage and controls the pulse width control circuit; and a ripple-voltage detecting and controlling circuit that extracts a ripple-voltage component of the secondary-side DC output voltage and stop-controls the output-error detecting circuit when the ripple-voltage component exceeds a predetermined voltage, wherein a stop-control signal from the ripple-voltage detecting and controlling circuit causes the output-error detecting circuit to stop outputting, which in turn causes the pulse width control circuit to stop providing a drive signal to the switching circuit, and then an operation of the switching power supply circuit is stopped.

In such a configuration as described above, if the secondary-side electrolytic capacitor deteriorates over the limit, the ripple-voltage detecting and controlling circuit detects the deterioration of the secondary-side electrolytic capacitor, to stop-control the output-error detecting circuit, which in turn stops a signal to the pulse width control circuit, thus causing the pulse width control circuit to stop providing the drive signal to the switching circuit and then to stop an operation of the switching power supply circuit for protection.

### Advantageous Effects of the Invention

According to the present invention, a low cost and a space-saving switching power supply device can be provided, just by adding a simple circuit, with functions of detecting a deterioration of an electrolytic capacitor in a smoothing circuit and avoiding a possible disruptive accident due to the deterioration of the electrolytic capacitor. In addition, the circuit according to the present invention can be integrated with the pulse width control circuit into an integrated circuit or IC.

### BRIEF DESCRIPTION OF DRAWINGS

FIG.1 is a circuit diagram showing a schematic configuration of a first embodiment of the present invention.
FIG.2 is a circuit diagram showing a first exemplary configuration of a ripple-voltage detecting and controlling circuit in the first embodiment of the present invention.
FIG.3 is a circuit diagram showing a second exemplary configuration of a ripple-voltage detecting and controlling circuit in the first embodiment of the present invention.
FIG.4 is a circuit diagram showing a third exemplary configuration of a ripple-voltage detecting and controlling circuit in the first embodiment of the present invention.
FIG.5 is a circuit diagram showing a fourth exemplary configuration of a ripple-voltage detecting and controlling circuit in the first embodiment of the present invention.
FIG.6 is a circuit diagram showing a fifth exemplary configuration of a ripple-voltage detecting and controlling circuit in the first embodiment of the present invention.
F IG.7 is a circuit diagram showing a sixth exemplary configuration of a ripple-voltage detecting and controlling circuit in the first embodiment of the present invention.
FIG.8 is a circuit diagram showing a seventh exemplary configuration of a ripple-voltage detecting and controlling circuit in the first embodiment of the present invention.

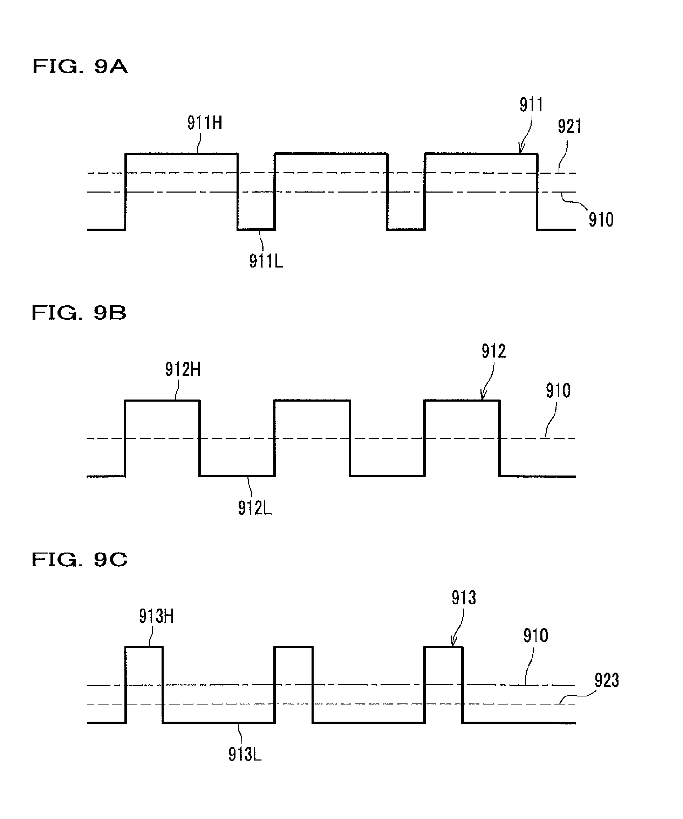

FIGS.9A-9C are schematic diagrams of characteristics showing a general relationship between pulse waveforms, with which the pulse width control circuit drives the switching circuit, and a DC output voltage at the secondary side in the first embodiment of the present invention, where FIG. 9A is for a case when the period time of an ON-OFF control waveform staying high is longer than that staying low, FIG. 9B is for a case when the period time of an ON-OFF control waveform staying high is equal to that staying low, and FIG. 9C is for a case when the period time of an ON-OFF control waveform staying high is shorter than that staying low.
FIG. 10 is a circuit diagram showing a schematic configuration of a second embodiment of the present invention.
FIG. 11 is a circuit diagram showing a schematic configuration of a third embodiment of the present invention.

### EMBODIMENTS OF THE INVENTION

Hereinafter, embodiments of the present invention will be described with reference to the drawings.

### First Embodiment

First, a description will be given of a circuit configuration of the first embodiment according to the present invention.

### <Circuit Configuration >

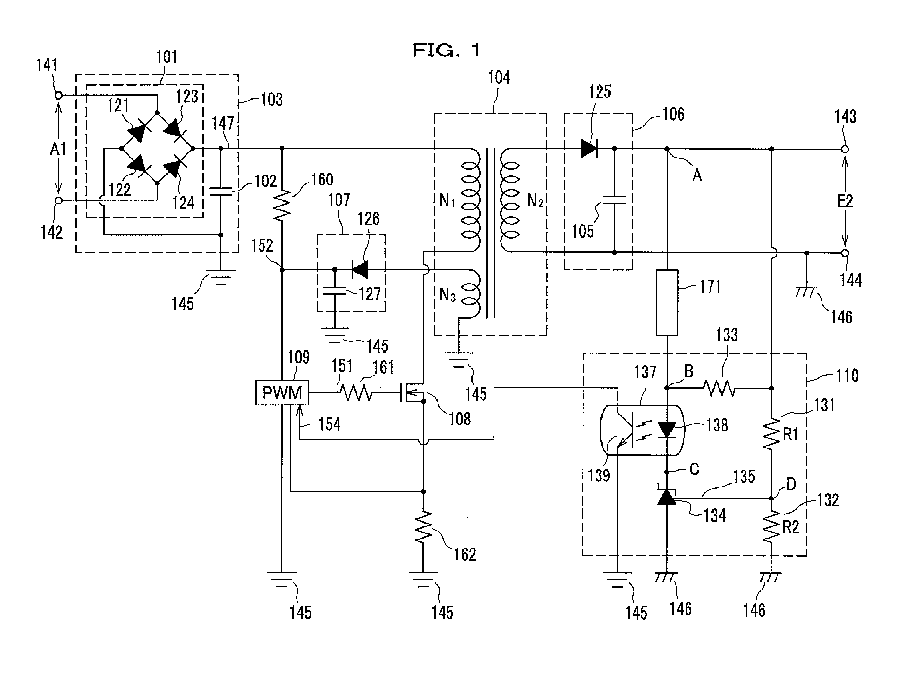

FIG.1 is a circuit diagram showing a schematic configuration of a first embodiment of a switching power supply circuit with a protection circuit according to the present invention.

In FIG.1, a primary-side rectifying circuit 101 performs, by a bridge circuit configured with diodes 121 to 124, full-wave rectification of AC power (AC voltage A1) inputted from AC power supply terminals 141, 142 to output DC power, including ripples, across a primary-side DC terminal 147 and a primary-side ground 145.

A primary-side electrolytic capacitor 102 is connected between the primary-side DC terminal 147 and the primary-side ground 145, to smooth the DC power, including ripples, outputted from the primary-side rectifying circuit 101.

Note that the primary-side rectifying circuit 101 and the primary-side electrolytic capacitor 102 constitute a primary-side rectifying and smoothing circuit 103.

A transformer 104 includes a primary winding N1, a secondary winding N2 and a tertiary winding N3. Here the turn ratio of the primary winding N1, the secondary winding N2, and the tertiary winding N3 is assumed to be N1:N2:N3. In this case, an AC voltage applied across both ends of the primary winding N1 is outputted across both ends of the secondary winding N2 as an AC voltage of approximately N2/N1 times the voltage across both ends of the primary winding N1. Also, an AC voltage of approximately N3/N2 times the voltage across both ends of the secondary winding N2 is outputted across both ends of the tertiary winding N3.

Note that circuits related to the primary winding N1, the secondary winding N2, and the tertiary winding N3 will be expressed as a primary-side circuit, a secondary-side circuit, and a tertiary-side circuit, respectively, as appropriate.

A first terminal at one end of the primary winding N1 is connected to the primary-side DC terminal 147, a second terminal at another end is connected to a drain terminal of an N-type MOSFET (Metal-Oxide-Semiconductor Field-Effect Transistor), which constitutes a switching circuit 108, and a source terminal of the N-type MOSFET is connected via a resister 162 to the primary-side ground 145.

A first terminal of the secondary winding N2 is connected to an anode of a diode 125, and a cathode of the diode 125 is connected to a secondary-side DC output terminal 143. A second terminal of the secondary winding N2 is connected to a secondary-side DC output terminal 144 at a ground side (secondary-side ground 146). Also, a secondary-side electrolytic capacitor 105 is connected between the secondary-side DC output terminal 143 and the secondary-side DC output terminal 144 at the ground side.

The diode 125 constitutes a secondary-side rectifying circuit (125) and rectifies AC power induced in the secondary winding N2. The secondary-side electrolytic capacitor 105 smoothes the rectified DC power, including ripples, outputted from the diode 125.

Also, the secondary-side rectifying circuit (125), composed of the diode 125, and the secondary-side electrolytic capacitor 105 constitute a secondary-side rectifying and smoothing circuit 106. This secondary-side rectifying and smoothing circuit 106 outputs DC power (a secondary-side DC output voltage E2) across the secondary-side DC output terminal 143 and the secondary-side DC output terminal 144 which is connected to the secondary-side ground 146.

In addition, as described above, the secondary-side DC output terminal 144 is connected to the secondary-side ground 146. Both of the primary-side ground 145 and the secondary-side ground 146 are grounds but galvanically isolated.

A first terminal of the tertiary winding N3 is connected to an anode of a diode 126, and a second terminal of the tertiary winding N3 is connected to the primary-side ground 145. A smoothing capacitor 127 is connected between a cathode of the diode 126 and the primary-side ground 145. The diode 126 constitutes a tertiary-side rectifying circuit 126, to rectify AC power induced in the tertiary winding N3. The smoothing capacitor 127 smoothes the rectified DC power, including ripples, outputted from the diode 126.

The tertiary-side rectifying circuit (126), composed of the diode 126, and the smoothing capacitor 127 constitute a tertiary-side rectifying and smoothing circuit 107. The tertiary-side rectifying and smoothing circuit 107 rectifies and smoothes AC power induced in the tertiary winding N3, to output DC power.

An output-error detecting circuit 110 is a circuit that divides the DC voltage (secondary-side DC output voltage E2) outputted across the secondary-side DC output terminals 143 and 144, by resistors 131 and 132, and detects an error (deviation) between the divided voltage and a reference voltage which is built in a shunt regulator 134.

In addition, the output-error detecting circuit 110 includes resistors 131, 132, 133, a shunt regulator 134, a Light-Emitting Diode (LED) 138, and a photo coupler 137 composed of a photo transistor 139.

The voltage obtained by dividing the secondary-side DC voltage E2 by resistors 131 and 132, is inputted to a reference terminal 135 of the shunt regulator 134. An anode of the shunt regulator 134 is connected to the secondary-side ground 146. A cathode of the shunt regulator 134 is connected to a cathode of the LED 138. An anode of the LED 138 is connected to a first terminal of the resistor 133. A second terminal of the resistor 133 is connected to the secondary-side DC output terminal 143.

In addition, the LED 138 outputs emitted light as an input to a base of the photo transistor 139. An emitter of the photo transistor 139 is connected to the primary-side ground 145, and a collector thereof is designated as an output terminal of the output-error detecting circuit 110.

Note that the reason for using the photo coupler 137, composed of the LED 138 and the photo transistor 139, is because the primary-side ground 145 and the secondary-side ground 146 need to be galvanically isolated from each other and thus it is impossible to exchange electric signals directly between those circuits operated with different grounds, respectively, other than converting to and exchanging optical signals.

In the configuration above, a determination is made whether the secondary-side DC output voltage E2 is higher or lower than a voltage which is (R1+R2)/R2 times the reference voltage (inherent in the shunt regulator 134).

When the secondary-side DC output voltage E2 is higher, the shunt regulator 134 turns on to flow an electric current through the LED 138, then the LED 138 emits light to output an optical signal, which is received by the photo transistor 139 (ON-state).

Note that the resistor 133 is provided for adjusting an amount of the electric current that flows through the LED 138.

Alternatively, when the secondary-side DC output voltage E2 is lower, the shunt regulator 134 turns off not to flow an electric current through the LED 138. Therefore, as the LED 138 does not emit light, the photo transistor 139 is turned off (OFF-state).

The detection signal above, ON or OFF, of the photo transistor 139 is sent from the collector of the photo transistor 139, i.e. the output terminal of the output-error detecting circuit 110, to an input terminal 154 of a pulse width control circuit (PWM) 109.

The circuit configuration of the output-error detecting circuit 110 described above works so as to keep the secondary-side DC output voltage E2 at an appropriate value.

Note that the primary reason of using the output-error detecting circuit 110 is for stabilizing the secondary-side DC output voltage E2, but not particularly for detecting a deterioration of the secondary-side electrolytic capacitor 105, which will be described later.

A positive power supply for the pulse width control circuit 109 is provided, when activating the switching power supply circuit, with the positive electric potential of the primary-side DC terminal via a resistor 160, and after activation of the power supply, from an output terminal 152 of the tertiary-side rectifying and smoothing circuit 107. Also, an output terminal 151 of the pulse width control circuit 109 is connected to a gate (gate input-terminal) of the N-type MOSFET, which is the switching circuit 108, to control ON-OFF of the N-type MOSFET.

Note that a pulse width of waveform of a drive signal, outputted from the output terminal 151 of the pulse width control circuit 109, is controlled so as to be varied.

In addition, a negative power supply for the pulse width control circuit 109 is provided directly from the primary-side ground 145, and from the primary-side ground 145 via the resistor 162.

The above-described configuration is one that basically constitutes a conventional switching power supply circuit.

In FIG.1, a ripple-voltage detecting and controlling circuit 171 is a circuit related to a protective function that characterizes the present embodiment, but it will be described later as it is not directly related to a basic function of the switching power supply circuit. Next, a description will be first given of a basic operation of the conventional switching power supply circuit.

### <General Operation of Switching Power Supply Circuit>

As described above, the DC power obtained by the primary-side rectifying and smoothing circuit 103 rectifying and smoothing the AC power is applied across both ends of a series circuit of the primary winding N1 of the transformer 104 and the N-type MOSFET which is the switching circuit 108.

The gate of the N-type MOSFET 108 is connected via a resistor 161 to the output terminal 151 of the pulse width control circuit 109 and ON-OFF controlled.

Therefore, an electric current flows or stops flowing through the primary winding N1 of the transformer 104, depending on the drive signal outputted from the pulse width control circuit 109. By this, an electric current flows and stops flowing intermittently from the DC power accumulated in the primary-side electrolytic capacitor, and corresponds to generating AC power out of DC power.

In addition, the generated AC component is induced and transmitted from the primary winding N1 of the transformer 104 to the secondary winding N2 thereof. The AC power induced at the secondary-side of the transformer 104 is converted to DC power again by the secondary-side rectifying and smoothing circuit 106, to generate DC power of the secondary-side DC output voltage E2 across the secondary-side DC output terminals 143 and 144.

The secondary-side DC output voltage E2 is divided by the resistors R1 and R2 for comparison of the divided voltage with the reference voltage, which is built in the shunt regulator 134 of the output-error detection circuit 110, whether the divided voltage value is higher or lower than the reference voltage value.

Then, the comparison result is sent to the pulse width control circuit 109, as an output signal from the output-error detection circuit 110. In addition, as described above, the pulse width control circuit 109 changes the pulse width, reflecting the output signal of the output-error detection circuit 110, to control the period of ON-OFF time of the switching circuit 108.

This causes the secondary-side DC output voltage E2 to be adjusted and kept at the designated voltage.

### «General Characteristics of Secondary-side DC Output Voltage E2»

FIGS.9A-9C are schematic diagrams of general characteristics showing how the secondary-side DC output voltage E2 transitions, as a result that the electric current flows and stops flowing through the primary winding N1 of the transformer 104 due to ON-OFF of the switching circuit 108.

Additionally, the schematic diagrams of characteristics in FIGS. 9A-9C are intended to show the transition, and values of the secondary-side DC output voltage E2 or control signal waveforms are not exactly in scale with the real.

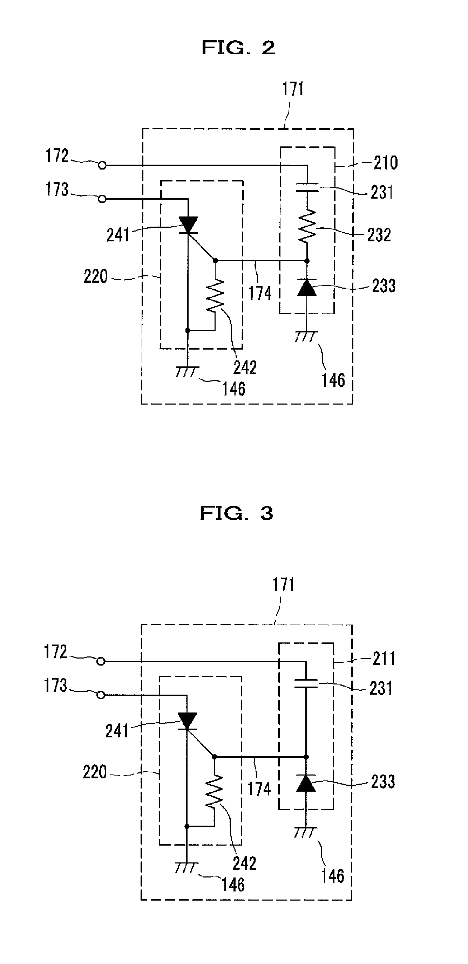

Note that FIGS. 2-8 will be described later.

FIG.9B is for a case when a period 912H, during which an ON-OFF control waveform 912 is high, and a period 912L, during which the ON-OFF control waveform 912 is low, are equal to each other, where an average value of the secondary-side DC output voltage E2 becomes an average value 910.

FIG.9A is for a case when a period 911H, during which an ON-OFF control waveform 911 is high, is longer than a period 911L, during which an ON-OFF control waveform 911 is low, where an average value of the secondary-side DC output voltage E2 becomes an average value 921, which is higher than the average value 910 in the case of the high period of 912H and low period of 912L being equal to each other, as described above.

FIG.9C is for a case when a period 913H, during which an ON-OFF control waveform 913 is high, is shorter than a period 913L, during which the ON-OFF control waveform 913 is low, where an average value of the secondary-side DC output voltage E2 becomes an average value 923, which is lower than the average value 910 in the case of the high period of 912H and low period of 912L being equal to each other, as described above.

As explained above, the secondary-side DC output voltage E2 varies by controlling, with the ON-OFF of the switching circuit 108, the duration time (pulse width) when an electric current flows through the primary winding N1 of the transformer 104.

Under the control as described above, the conventional switching power supply device keeps the secondary-side DC output voltage E2 at the designated voltage.

### <Protection Circuit of Switching Power Supply Circuit >

Next, a description will be given of a protection circuit of the switching power supply circuit. To begin with, a description will be given of an electrolytic capacitor, which is used in the switching power supply circuit and requires the protection circuit.

### «Electrolytic Capacitor»

In the switching power supply circuit (device), as described above, the primary-side rectifying and smoothing circuit 103 and the secondary-side rectifying and smoothing circuit 106 have the primary-side electrolytic capacitor 102 and the secondary-side electrolytic capacitor 105 mounted, respectively, as smoothing capacitors. These electrolytic capacitors cause, as they deteriorate, the ESR value to increase and the electrostatic capacity to decrease.

In an electrolytic capacitor, if the ESR value (R) thereof increases and the electric current (i) flows therethrough, the electrolytic capacitor itself will bear a high temperature caused by the Joule heat (i²R), and sometimes burst as a result of increasing inner pressure.

In addition, the decreased electrostatic capacity of an electrolytic capacitor may cause decreased output characteristics of the switching power supply circuit (device) and/or abnormal heat in other parts.

Therefore, as described above, when the deterioration of an electrolytic capacitor reaches a limit, the deterioration needs to be detected for taking an action.

### «Overview of Protection Circuit»

For the reason above, the ripple-voltage detecting and controlling circuit 171 is provided in FIG. 1.

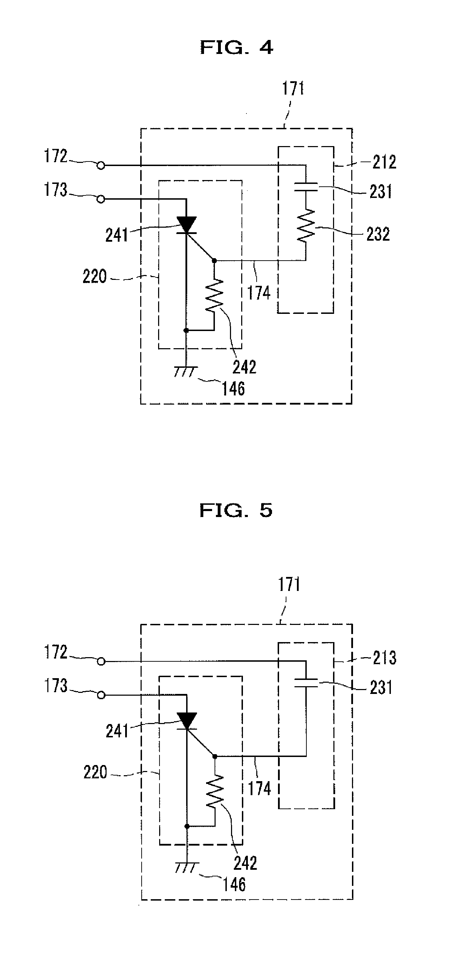

The ripple-voltage detecting and controlling circuit 171 has a first terminal 172 (see FIG. 4) connected to a point A (junction) which has substantially the same potential as the secondary-side DC output terminal 143, and a second terminal 173 (see FIG. 4) connected to a point B (junction) which is the anode of the LED138 in the output-error detecting circuit 110.

In addition, as provided with a circuit configuration to be described later, the ripple-voltage detecting and controlling circuit 171 detects a ripple voltage of the secondary-side DC output voltage E2 inputted from the first terminal 172 (see FIG. 4), and once the ripple voltage goes over a predetermined value, outputs substantially the same potential as the secondary-side ground 146 from the second terminal 173 (see FIG. 4) as a stop-control signal.

When substantially the same potential as the secondary-side ground 146 is outputted from the second terminal 173 (see FIG. 4) of the ripple-voltage detecting and controlling circuit 171, the point B of the output-error detecting circuit 110 has substantially the same potential as the secondary-side ground 146, to put the photo coupler 137 into the OFF-state.

As a result, a voltage level of the input terminal 154 for controlling the pulse width control circuit 109 increases, and upon reaching the predetermined reference voltage, the output of the pulse width control circuit 109 is stopped, then the switching operation of the N-type MOSFET or the switching circuit 108 stops. This cease of the switching operation causes an energy transmission from the primary-side circuit to the secondary-side circuit to stop, to decrease (stop) the output voltage at the secondary side.

As the switching power supply circuit stops its operation in this way, the electric current stops flowing through the primary-side electrolytic capacitor 102 and the secondary-side electrolytic capacitor 105, to stop the generation of Joule heat. Therefore, the electrolytic capacitors are prevented from having the high temperature and the increase of the inner pressure (and also burst), and abnormal heat in other parts is also avoided, to protect the switching power supply circuit.

### «First Exemplary Configuration of Ripple-voltage Detecting and Controlling Circuit»

Next, a description will be given of a specific circuit configuration of the ripple-voltage detecting and controlling circuit 171.

FIG.2 is a circuit diagram showing a first exemplary configuration of the ripple-voltage detecting and controlling circuit 171.

In FIG.2, the ripple-voltage detecting and controlling circuit 171 includes a ripple-voltage detecting unit 210 and a stop-control unit 220.

The first terminal 172 of the ripple-voltage detecting and controlling circuit 171 is intended to be an input terminal of the ripple-voltage detecting unit 210.

In addition, a detection signal from the ripple-voltage detecting unit 210 is inputted to the stop-control unit 220 via a detection signal terminal 174.

Further, a stop-control signal of the stop-control unit 220 is outputted from the second terminal 173, which is an output terminal of the stop-control unit 220 and also an output terminal of the ripple-voltage detecting and controlling circuit 171, as an output signal (stop-control signal) of the ripple-voltage detecting and controlling circuit 171.

Note that the first terminal (input terminal) 172 of the ripple-voltage detecting and controlling circuit 171 and the second terminal (output terminal) 173 thereof may be simply expressed as the first terminal 172 and the second terminal 173, respectively, as appropriate.

Next, a description will be given in sequence of a specific circuit configuration and an operation of the ripple-voltage detecting unit 210 and the stop-control unit 220.

### <Ripple Voltage Detecting Unit>

A description will be given of a detailed circuit configuration and an operation of the ripple-voltage detecting unit 210 in FIG. 2.

One end of a capacitor 231 is connected to the first terminal 172, and another end thereof is connected to one end of a resistor 232. Another end of the resistor 232 is connected to a cathode of a diode 233. An anode of the diode 233 is connected to the secondary-side ground 146.

The capacitor 231 extracts a ripple-voltage component that occurs in the secondary-side electrolytic capacitor 105 and is inputted from the first terminal 172.

In addition, the diode 233 removes a minus (negative) component of the ripple-voltage component above and takes only a plus (positive) component.

Further, the resistor 232 outputs a signal of a voltage adjusted through voltage-division with a resistor 242, in proportion to voltage values, to the stop-control unit 220, which includes the resistor 242 and will be described later, as a detection signal (detection signal terminal 174).

### <Stop-control Unit>

A description will be given of a detailed circuit configuration and an operation of the stop-control unit 220 in FIG. 2.

An anode of a thyristor 241 is connected to the second terminal 173, and a cathode thereof is connected to the secondary-side ground 146.

In addition, one end of the resistor 242 is connected to the other end of the resistor 232 of the ripple-voltage detecting unit 210, and another end of the resistor 242 is connected to the secondary-side ground 146.

Further, a detection signal (detection signal terminal 174) outputted from a junction between the resistor 242 and the resistor 232 is connected to a gate of the thyristor 241.

Note that when the voltage of the detection signal above exceeds a trigger voltage (predetermined voltage) at the gate of the thyristor 241, the thyristor 241 is activated to conduct the second terminal 173 connected to the anode of the thyristor 241 to the secondary-side ground 146 which is the cathode of the thyristor 241. At this time, a signal that has substantially the same potential as the secondary-side ground 146 is intended to be the output signal from the second terminal 173 as the stop-control signal.

### «Operation of Ripple-voltage Detecting and Controlling Circuit»

With the configuration described above, the ripple-voltage detecting unit 210 inputs from the first terminal 172 a ripple-voltage component that occurs in the secondary-side electrolytic capacitor 105, detects a positive component of the ripple voltage, and provides the outcome to the gate of the thyristor 241 in the stop-control unit 220 as a detection signal (detection signal terminal 174). When the detection signal exceeds the trigger voltage of the thyristor 241, the stop-control unit 220 outputs a stop-control signal having substantially the same potential as the secondary-side ground 146.

The output signal of the stop-control unit 220 is also intended to be the output signal from the ripple-voltage detecting and controlling circuit 171, and the stop-control signal having substantially the same potential as the secondary-side ground 146 is outputted from the second terminal 173 of the ripple-voltage detecting and controlling circuit 171.

By the second terminal 173 being changed to have substantially the same potential as the secondary-side ground 146, the operation of the output-error detecting circuit 110 is stopped.

Note that in the case when the second terminal 173 is connected to the point B, a more detailed operation will be described as follows, although the description may be partly duplicated.

In FIG. 1, the second terminal 173 is connected to the point B, and by applying a stop-control signal having substantially the same potential as the secondary-side ground 146 to the point B, the electric current through the LED 138 stops flowing, to turn the photo coupler 137 into an OFF-state, then the voltage level of the output signal (154) increases, and when it reaches a predetermined reference voltage, a drive signal of the output terminal 151 of the pulse width control circuit 109 stops.

At this time, by fixing the voltage level of the gate of the N-type MOSFET 108 to the potential of the primary-side ground 145, the N-type MOSFET 108 is turned into an OFF-state. By turning the N-type MOSFET 108 into the OFF-state, an electric current stops flowing through the primary winding N1, then an electric current also stops flowing through the secondary winding N2. As a result, an energy transmission from the primary-side circuit to the secondary-side circuit stops, and the output voltage at the secondary side decreases (stops). In other words, the switching power supply circuit stops its operation.

Additionally, in the above process of stopping the operation of the switching power supply circuit, the photo coupler 137 is utilized, but the photo coupler 137 is required primarily for transmitting the output signal of the output-error detecting circuit 110, which stabilizes the secondary-side DC output voltage E2, to the pulse width control circuit 109, as described above. Therefore, the photo coupler is not newly added for transmitting the stop-control signal (second terminal 173, see FIG. 2) of the ripple-voltage detecting and controlling circuit 171.

### «Second Exemplary Configuration of Ripple-voltage Detecting and Controlling Circuit»

Next, a description will be given of a second example of the ripple-voltage detecting and controlling circuit.

FIG. 3 is a circuit diagram showing the second exemplary configuration of the ripple-voltage detecting and controlling circuit 171.

In FIG. 3, a part of the circuit configuration of a ripple-voltage detecting unit 211 in the ripple-voltage detecting and controlling circuit 171 is different from the ripple-voltage detecting unit 210 in FIG. 2. That is, the ripple-voltage detecting unit 211 includes the capacitor 231 and the diode 233, but does not include the resistor 232 in FIG. 2.

As the resistor 232 in FIG. 2 is, as described above, intended to adjust a voltage through voltage-division with the resistor 242 in the stop-control unit 220, there is a case where the resistor 232 is not required in the relationship between the trigger voltage of the thyristor 241 and the ripple-voltage component that occurs in the secondary-side electrolytic capacitor 105. A circuit in such a case is the second exemplary configuration of the ripple-voltage detecting and controlling circuit 171 in FIG. 3. There are advantageous effects in the case in FIG. 3 that the number of components as well as its occupying space and its cost can be reduced.

Note that the other parts of the circuit configuration are the same as those in FIG. 2, and thus a duplicate description will be omitted.

### <Third Exemplary Configuration of Ripple-voltage Detecting and Controlling Circuit>>

Next, a description will be given of a third example of the ripple-voltage detecting and controlling circuit.

FIG. 4 is a circuit diagram showing the third exemplary configuration of the ripple-voltage detecting and controlling circuit 171.

In FIG.4, a part of the circuit configuration of a ripple-voltage detecting unit 212 in the ripple-voltage detecting and controlling circuit 171 is different from the aforesaid ripple-voltage detecting units 210 and 211. That is, the ripple-voltage detecting unit 212 includes the capacitor 231 and the resistor 232, but does not include the diode 233 in FIG. 2 or 3.

The diode 233 in FIG. 2 or 3 is intended to remove a negative component of the ripple-voltage component and to take only a plus component, but in FIG. 4 a negative component is also applied to the thyristor 241 as it is.

In a case where the characteristic of the gate voltage (reverse voltage) of the thyristor 241 allows, a ripple voltage extracted by the capacitor 231 may be applied to the gate of the thyristor 241 without cutting off (deleting, removing) the negative component of the ripple voltage. In this case, the diode 233 (see FIG. 2) is not required. Such a circuit without using a diode is the third exemplary configuration of the ripple-voltage detecting and controlling circuit 171 in FIG. 4. There are advantageous effects in the case in FIG. 4 that the number of components as well as its occupying space and its cost can be reduced.

Note that the other parts of the circuit configuration than the above-described one are the same as those in FIGS. 2 and 3, and thus a duplicate description will be omitted.

### «Fourth Exemplary Configuration of Ripple-voltage Detecting and Controlling Circuit»

Next, a description will be given of a fourth example of the ripple-voltage detecting and controlling circuit.

FIG. 5 is a circuit diagram showing the fourth exemplary configuration of the ripple-voltage detecting and controlling circuit 171.

In FIG.5, a ripple-voltage detecting unit 213 in the ripple-voltage detecting and controlling circuit 171 includes the capacitor 231. There is a case where the resistor 232 (see FIG. 4) is not required either and all that is left is the capacitor 231, in the relationship between the trigger voltage of the thyristor 241 and a level of the voltage from which the ripple-voltage component that occurs in the secondary-side electrolytic capacitor 105 is detected (extracted). Such a circuit without using a resistor either is the fourth exemplary configuration of the ripple-voltage detecting and controlling circuit 171 in FIG. 5.

There are advantageous effects in the case in FIG. 5 that the number of components as well as its occupying space and its cost can be reduced.

Note that the other parts of the circuit configuration than the above-described one are the same as those in FIGS. 2 to 4, and thus a duplicate description will be omitted.

### «Fifth Exemplary Configuration of Ripple-voltage Detecting and Controlling Circuit»

Next, a description will be given of a fifth example of the ripple-voltage detecting and controlling circuit.

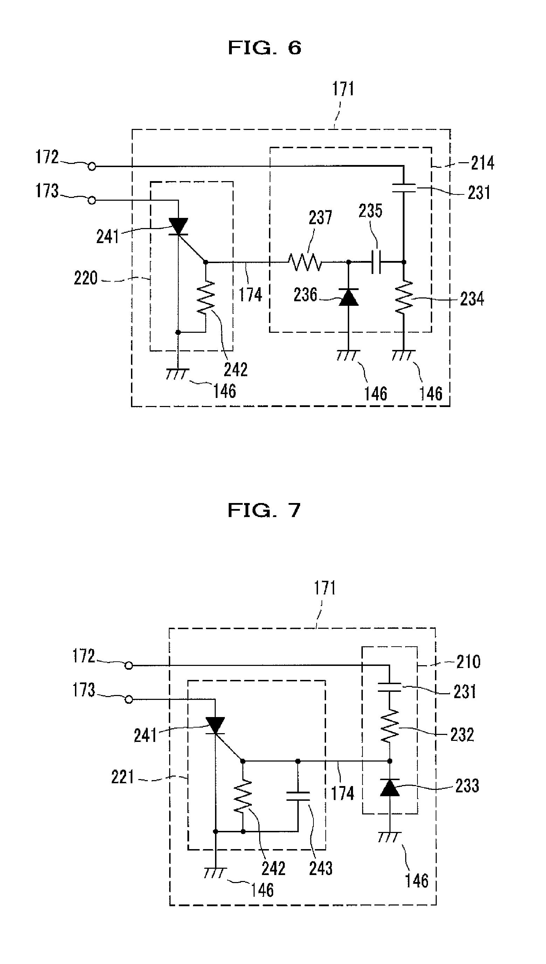

FIG. 6 is a circuit diagram showing the fifth exemplary configuration of the ripple-voltage detecting and controlling circuit 171.

In FIG. 6, a ripple-voltage detecting unit 214 in the ripple-voltage detecting and controlling circuit 171 is different in configuration from the ripple-voltage detecting units 210-213 in FIGS. 2 to 5.

That is, the capacitor 231 is connected to one end of a resistor 234, and another end of the resistor 234 is connected to the secondary-side ground 146. One end of a capacitor 235 is connected to a junction between the capacitor 231 and the resistor 234, and another end of the capacitor 235 is connected to a cathode of a diode 236. An anode of the diode 236 is connected to the secondary-side ground 146. One end of a resistor 237 is connected to the cathode of the diode 236, and the ripple-voltage detecting unit 214 outputs a detection signal (detection signal terminal 174) from another end of the resistor 237.

In the above configuration, a ripple voltage that has been detected by the capacitor 231 and the resistor 234 is clamped (0V, secondary-side ground potential) by the capacitor 235 and the diode 236, to increase the detection level. Additionally, the resistor 237 further adjusts the detection voltage.

With the above configuration, there is an advantageous effect that a relatively small ripple voltage can be detected.

Note that the other parts of the circuit configuration than the above-described one are the same as those in FIGS. 2 to 4, and thus a duplicate description will be omitted.

### «Sixth Exemplary Configuration of Ripple-voltage Detecting and Controlling Circuit»

Next, a description will be given of a sixth example of the ripple-voltage detecting and controlling circuit.

FIG. 7 is a circuit diagram showing the sixth exemplary configuration of the ripple-voltage detecting and controlling circuit 171.

In FIG.7, a circuit configuration of a stop-control unit 221 in the ripple-voltage detecting and controlling circuit 171 is different from those in FIGS. 2-6. Note that the ripple-voltage detecting unit 210 has the same configuration as that in FIG. 2.

In the stop-control unit 221, the configuration including the thyristor 241 and the resistor 242 is the same as that in FIG. 2, and a capacitor 243 is newly provided in parallel to the resistor 242. The capacitor 243 is intended to remove a noise at the gate of the thyristor 241.

With the above configuration, there is an advantageous effect that an impact from the noise can be reduced, to perform an operation with higher accuracy.

Note that the other parts of the circuit configuration than the above-described one are the same as those in FIG. 2, and thus a duplicate description will be omitted.

### «Seventh Exemplary Configuration of Ripple-voltage Detecting and Controlling Circuit»

Next, a description will be given of a seventh example of the ripple-voltage detecting and controlling circuit.

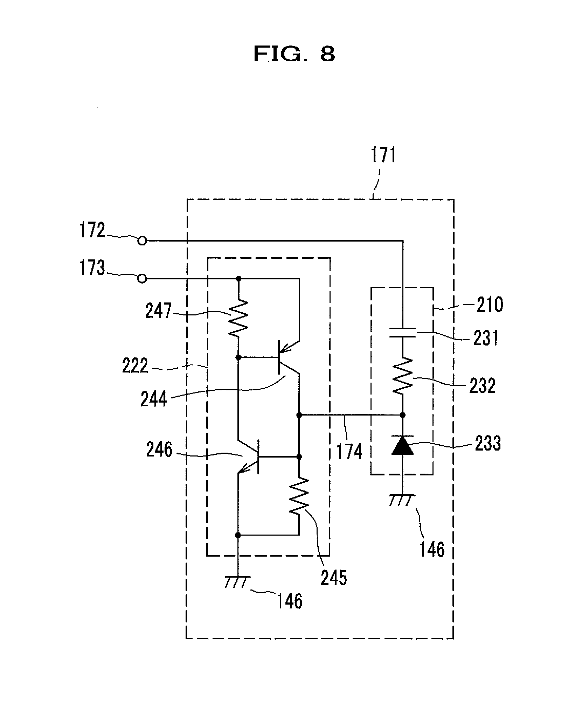

FIG. 8 is a circuit diagram showing the seventh exemplary configuration of the ripple-voltage detecting and controlling circuit 171.

In FIG.8, a circuit configuration of a stop-control unit 222 in the ripple-voltage detecting and controlling circuit 171 is different from those in FIGS. 2-7. Note that the ripple-voltage detecting unit 210 has the same configuration as those in FIGS. 2 and 7.

In the stop-control unit 222, one end of a resistor 247 and an emitter of a PNP bipolar transistor 244 are connected to the second terminal 173 of the ripple-voltage detecting and controlling circuit 171. Another end of the resistor 247 is connected to a base of the PNP bipolar transistor 244 and a collector of an NPN bipolar transistor 246. An emitter of the NPN bipolar transistor 246 is connected to the secondary-side ground 146 and one end of a resistor 245. Another end of the resistor 245 is connected to a base of the NPN bipolar transistor 246 and a collector of the PNP bipolar transistor 244. A junction between the collector of the PNP bipolar transistor 244 and the resistor 245 is inputted with the detection signal (detection signal terminal 174) that is the output of the ripple-voltage detecting unit 210.

The detection signal (detection signal terminal 174) inputted to the stop-control unit 222 is inputted to the base of the NPN bipolar transistor 246, and when it reaches a predetermined voltage, the NPN bipolar transistor 246 is turned on (ON-state, conducted), to make the potential of the second terminal 173 of the ripple-voltage detecting and controlling circuit 171 substantially the same as that of the secondary-side ground 146.

By changing the second terminal 173 so as to have the potential of the secondary-side ground 146, the operation of the output-error detecting circuit 110 is stopped.

In addition, as the PNP bipolar transistor 244, the NPN bipolar transistor 246, and the resistors 245, 247 constitute a feedback circuit, the detection signal is latched (kept, maintained).

The above configuration shows that the ripple-voltage detecting and controlling circuit 171 can be configured without using the thyristor 241.

Note that the other parts of the configuration than the stop-control unit 222 are the same as those in FIG. 2, and thus a duplicate description will be omitted.

### Second Embodiment

Next, a second embodiment of the present invention will be described.

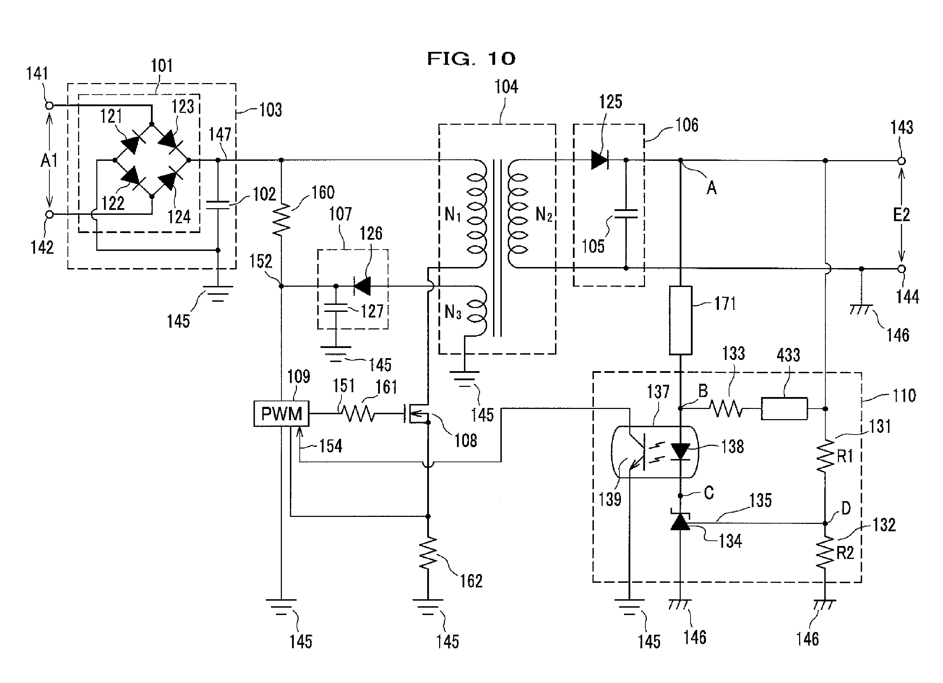

FIG. 10 is a circuit diagram showing a schematic configuration of the second embodiment of a switching power supply circuit with protection circuit according to the present invention.

FIG. 10 is different from FIG.1 in that a thermal fuse 433 is inserted in series with the resistor 133 in the output-error detecting circuit 110.

The thermal fuse 433 is disposed in the vicinity of the secondary-side electrolytic capacitor 105. Thus, when the secondary-side electrolytic capacitor 105 generates heat due to deterioration thereof, the temperature of the thermal fuse 433 also increases, and once it reaches a predetermined temperature, the temperature fuse 433 is blown.

Then, an electric current stops flowing through the resistor 133, and an electric current flowing through the photo coupler 137 is also limited. In this case, with the same mechanism as in FIG. 1 such that the ripple-voltage detecting and controlling circuit 171 detects a predetermined ripple voltage to perform its operation for turning the photo coupler 137 into an OFF-state, the switching power supply circuit stops its operation. Therefore, the switching power supply circuit is protected.

Note that the other parts of the configuration than the thermal fuse 433 are the same as those in FIG. 1, and thus a duplicate description will be omitted.

### Third Embodiment

Next, a third embodiment of the present invention will be described.

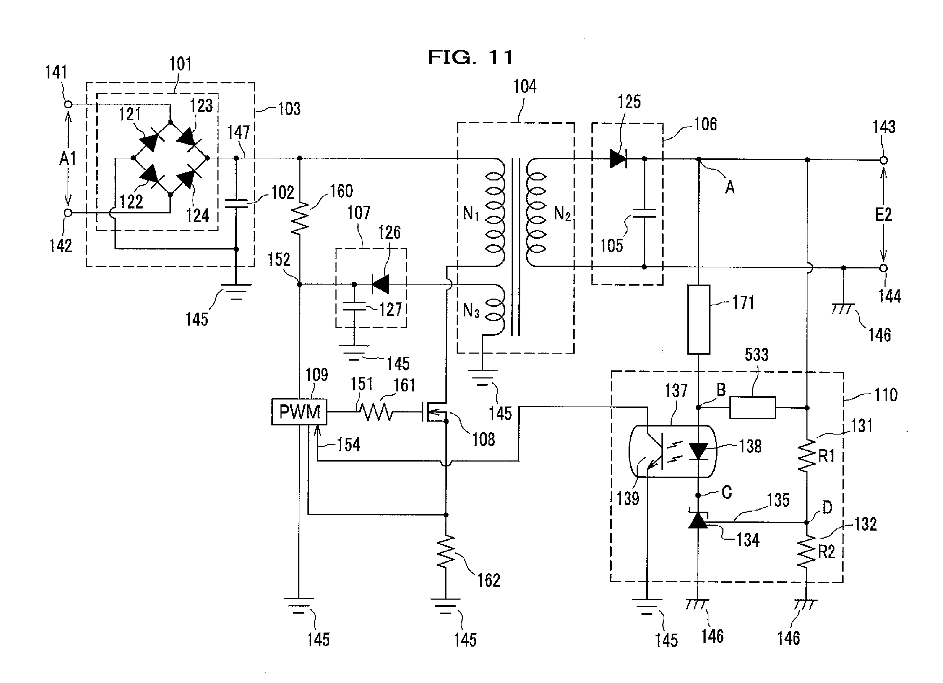

FIG. 11 is a circuit diagram showing a schematic configuration of the third embodiment of a switching power supply circuit with protection circuit according to the present invention.

FIG.11 is different from FIG.1 in that the resistor 133 in the output-error detecting circuit 110 is replaced by a Posister 533. A Posister is an element whose resistance value rapidly increases once a temperature thereof exceeds a predetermined temperature.

The Posister 533 is disposed in the vicinity of the secondary-side electrolytic capacitor 105. Thus, when the secondary-side electrolytic capacitor 105 generates heat due to deterioration thereof, the temperature of the Posister 533 also increases, and once it reaches a predetermined temperature, the resistance value of the Posister 533 largely increases to limit an electric current flowing through the photo coupler 137. In this case too, with the same mechanism as in FIG. 1 such that the ripple-voltage detecting and controlling circuit 171 detects a predetermined ripple voltage to perform its operation for turning the photo coupler 137 into an OFF-state, the switching power supply circuit stops its operation. Therefore, the switching power supply circuit is protected.

Note that the other parts of the configuration than the Posister 533 are the same as those in FIG. 1, and thus a duplicate description will be omitted.

### Other Embodiments

Note that the present invention is not limited to the above-described embodiments. There are other embodiments as described hereinafter.

### «Connection Point of Output of Ripple-voltage Detecting and Controlling Circuit»

In FIG. 1, the ripple-voltage detecting and controlling circuit 171 has the first terminal 172 and the second terminal 173 connected to the point A and the point B which is the anode of the LED in the output-error detecting circuit 110, respectively.

However, the connection point of the second terminal 173 is not limited to the point B.

It may be a point C (junction) that corresponds to the cathode of the shunt regulator 134, or a point D (junction) that is a junction between the resistors 131 and 132 and also corresponds to the reference terminal 135 of the shunt regulator 134.

When the potential of the point C or D is changed to be substantially the same as that of the secondary-side ground 146, the LED 138 stops its normal operation, then to stop a signal of the normal operation from the photo coupler 137 to the pulse width control circuit 109.

In the case of the point C, for instance, the photo coupler 137 is changed to an ON-state to cause the input terminal 154 used for controlling the pulse width control circuit 109 to be fixed to substantially the same potential as the primary-side ground 145, and thus the pulse width control circuit 109 stops its output to stop the switching operation of the N-type MOSFET 108.

Note that in the case of the point B, the photo coupler 137 is changed to an OFF-state, while in the case of the point C, the photo coupler 137 is changed to an ON-state. However, as the respective states are maintained in both cases, the switching operation of the N-type MOSFET is stopped in any of the cases.

### «Other Configuration 1 of Output-error Detecting Circuit»

In addition, the configuration of the output-error detecting circuit 110 is not limited to that in FIG. 1. The shunt regulator 134 need not always be used, and another circuit configuration may be used to implement the equivalent function (to detect a deviation of the secondary-side DC output voltage from the reference voltage).

### «Other Configuration 2 of Output-error Detecting Circuit»

Further, the configuration of the output-error detecting circuit 110 provided with the thermal fuse 433 or the Posister 533 is not limited to that in FIG. 10 or 11, either. Another circuit configuration may be used to implement the equivalent function (to detect a deviation of the secondary-side DC output voltage from the reference voltage), or the thermal fuse 433 or the Posister 533 may be used at a position different from that in FIG. 10 or 11.

### «Element of Switching Circuit»

Furthermore, FIG. 1 shows an example in which the switching circuit 108 uses the N-type MOSFET, but a P-type MOSFET may be used by changing the polarity of the drive signal waveform that is outputted from the output terminal 151 of the pulse width control circuit 109.

Moreover, it is not limited to a MOSFET, and an IGBT (Insulated Gate Bipolar Transistor) may be used instead.

### «Element of Stop-control Unit»

Still further, FIG. 8 shows an example in which the PNP bipolar transistor 244 and the NPN bipolar transistor 246 are used, but they are not limited to the bipolar transistors. An N-type MOSFET or a P-type MOSFET may be used instead to configure the circuit.

### <<Circuit Configuration of Power Supply for Activating Pulse Width Control Circuit (PWM)>>

Depending on the characteristics of the pulse width control circuit (PWM) 109, an input power supply at the activation time may not be a DC power supply from the primary-side DC terminal 147, but an AC power supply across the AC power supply terminals 141 and 142. Alternatively, the circuit may be configured such that the power supply is switched to the DC power supply from the primary-side DC terminal 147 at a time when it is fully activated for functioning.

### «Connection of Output Signal of Stop-control Unit»

When the switching power supply circuit already has an over-voltage protective function or an over-current protective function provided with a circuit that can transmit a signal from a secondary-side circuit to a primary-side circuit (corresponding to a circuit inclusive of the photo coupler 137 in FIG. 1), the circuit may be diverted for the stop-control unit.

### <<Element Essentiality 1>>

In addition, the resistor 160 and/or the resistor 161 in FIG. 1 are not necessarily essential elements.

### «Element Essentiality 2»

When the output-error detecting circuit 110 has a circuit configuration provided with the thermal fuse 433 in FIG. 10 or the Posister 533 in FIG. 11, the ripple-voltage detecting and controlling circuit 171 is not necessarily an essential element.

### «Downsizing»

Further, by integrating the ripple-voltage detecting and controlling circuit 171 and the entire or part of the output-error detecting circuit 110 into an integrated circuit, the occupation space (volume) and/or the number of circuit elements can be reduced as a whole.

### Supplements to the Invention, Embodiments

Hereinabove, the switching power supply circuit with protective function according to the present embodiments is provided with functions of detecting deterioration of the secondary-side electrolytic capacitor 105 of the smoothing circuit in the secondary-side circuit and automatically stopping the operation of the switching power supply circuit, to avoid in advance a disruptive accident due to the deterioration of the secondary-side electrolytic capacitor 105.

That is, the switching power supply circuit is configured to detect the deterioration of the secondary-side electrolytic capacitor 105 by the ripple-voltage detecting and controlling circuit 171, then to stop-control the output-error detecting circuit 110. With this configuration, compared with a technique disclosed in Patent Document 1, the switching power supply circuit has substantial effects such as avoiding an addition of the photo coupler 137, reducing the number of circuit elements, reducing the occupation space (volume) of the elements and the wirings, thus reducing the cost.

In addition, the methods and circuits above according to the present embodiments have characteristics of being implemented by just adding a simple circuit element, without modifying the existing switching power supply circuit.

### DESCRIPTION OF REFERENCE SIGNS

- 101: Primary-side rectifying circuit
- 102: Primary-side electrolytic capacitor
- 103: Primary-side rectifying and smoothing circuit
- 104: Transformer
- 105: Secondary-side electrolytic capacitor
- 106: Secondary-side rectifying and smoothing circuit
- 107: Tertiary-side rectifying and smoothing circuit
- 108: Switching circuit, N-type MOSFET
- 109: Pulse width control circuit (PWM)
- 110: Output-error detecting circuit
- 121, 122, 123, 124, 233, 236: Diode
- 125: Diode, Secondary-side rectifying circuit
- 126: Diode, Tertiary-side rectifying circuit
- 127: Smoothing capacitor
- 131: Resistor (R1)
- 132: Resistor (R2)
- 133, 160, 161, 162, 232, 234, 237, 242, 245, 247: Resistor
- 134: Shunt regulator
- 135: Reference terminal of Shunt regulator
- 137: Photo coupler
- 138: Light Emitting Diode (LED)
- 139: Photo transistor
- 141, 142: AC power supply terminal
- 143, 144: Secondary-side DC output terminal
- 145: Primary-side ground
- 146: Secondary-side ground
- 147: Primary-side DC terminal
- 151: Output terminal of Pulse width control circuit
- 152: Output terminal of Tertiary-side rectifying and smoothing circuit
- 154: Input terminal for control
- 171: Ripple voltage detecting and controlling circuit
- 172: First terminal (Input terminal) of Ripple voltage detecting and controlling circuit
- 173: Second terminal (Output terminal) of Ripple voltage detecting and controlling circuit
- 174: Detection signal terminal
- 210, 211, 212, 213, 214: Ripple voltage detecting unit
- 220, 221, 222: Stop-control unit
- 231, 235, 243: Capacitor
- 241: Thyristor
- 244: PNP bipolar transistor
- 246: NPN bipolar transistor
- 433: Thermal fuse
- 533: Posister
- A, B, C, D: Junction
- A1: AC voltage, Input voltage
- E2: Secondary-side DC output voltage
- N1: Primary winding, Primary winding turns
- N2: Secondary winding, Secondary winding turns
- N3: Tertiary winding, Tertiary winding turns

## Claims

1. A switching power supply circuit with protective function for preventing a disruption of a switching power supply device due to a deterioration of an electrolytic capacitor, comprising:
a transformer having a primary winding, a secondary winding and a tertiary winding;
a primary-side rectifying circuit that converts AC power to DC power;
a primary-side electrolytic capacitor that smoothes the DC power outputted from the primary-side rectifying circuit;
a secondary-side rectifying circuit that converts AC power outputted from the secondary winding of the transformer to DC power;
a secondary-side electrolytic capacitor that smoothes the DC power outputted from the secondary-side rectifying circuit;
a tertiary-side rectifying and smoothing circuit that converts AC power outputted from the tertiary winding of the transformer to DC power and smoothes the DC power;
a switching circuit that repeatedly switches the primary winding of the transformer which inputs a voltage of the primary-side electrolytic capacitor;
a pulse width control circuit that controls the pulse width of a drive signal for controlling the switching of the switching circuit;
an output-error detecting circuit that detects a deviation of a secondary-side DC output voltage outputted by the secondary-side rectifying circuit and the secondary-side electrolytic capacitor from a predetermined reference voltage and controls the pulse width control circuit; and
a ripple-voltage detecting and controlling circuit that extracts a ripple-voltage component of the secondary-side DC output voltage and stop-controls the output-error detecting circuit when the ripple-voltage component exceeds a predetermined voltage,
wherein a stop-control signal from the ripple-voltage detecting and controlling circuit causes the output-error detecting circuit to stop outputting, which in turn causes the pulse width control circuit to stop providing a drive signal to the switching circuit, and then an operation of the switching power supply circuit is stopped.

2. The switching power supply circuit with protective function, according to claim 1, wherein the ripple-voltage detecting and controlling circuit comprises:
a ripple-voltage detecting unit that extracts the ripple-voltage component of the secondary-side DC output voltage; and
a stop-control unit that outputs, once a detection signal from the ripple-voltage detecting unit exceeds a predetermined voltage, the stop-control signal for stop-controlling the output-error detecting circuit.

3. The switching power supply circuit with protective function, according to claim 2, wherein the ripple-voltage detecting unit comprises a capacitor element.

4. The switching power supply circuit with protective function, according to claim 2, wherein the ripple-voltage detecting unit comprises a diode element.

5. The switching power supply circuit with protective function, according to any one of claims 2 to 4, wherein the ripple-voltage detecting unit comprises a series circuit of the capacitor element, a resistor element, and the diode element.

6. The switching power supply circuit with protective function, according to any one of claims 2 to 4, wherein the stop-control unit comprises a resistor element and a thyristor having the gate connected to one end of the resistor.

7. A switching power supply circuit with protective function for preventing a disruption of a switching power supply device due to a deterioration of an electrolytic capacitor, comprising:
a transformer having a primary winding, a secondary winding and a tertiary winding;
a primary-side rectifying circuit that converts AC power to DC power;
a primary-side electrolytic capacitor that smoothes the DC power outputted from the primary-side rectifying circuit;
a secondary-side rectifying circuit that converts AC power outputted from the secondary winding of the transformer to DC power;
a secondary-side electrolytic capacitor that smoothes the DC power outputted from the secondary-side rectifying circuit;
a tertiary-side rectifying and smoothing circuit that converts AC power outputted from the tertiary winding of the transformer to DC power and smoothes the DC power;
a switching circuit that repeatedly switches the primary winding of the transformer which inputs a voltage of the primary-side electrolytic capacitor;
a pulse width control circuit that controls the pulse width of a drive signal for controlling the switching of the switching circuit; and
an output-error detecting circuit that detects a deviation of a secondary-side DC output voltage outputted by the secondary-side rectifying circuit and the secondary-side electrolytic capacitor from a predetermined reference voltage and controls the pulse width control circuit, and that comprises a thermal fuse,
wherein the thermal fuse is disposed in the vicinity of the secondary-side electrolytic capacitor, and blown when the temperature of the thermal fuse increases to reach a predetermined temperature due to heat generated by the secondary-side electrolytic capacitor, thus causing the output-error detecting circuit to stop outputting, which in turn causes the pulse width control circuit to stop providing a drive signal to the switching circuit, and then an operation of the switching power supply circuit is stopped.

8. A switching power supply circuit with protective function for preventing a disruption of a switching power supply device due to a deterioration of an electrolytic capacitor, comprising:
a transformer having a primary winding, a secondary winding and a tertiary winding;
a primary-side rectifying circuit that converts AC power to DC power;
a primary-side electrolytic capacitor that smoothes the DC power outputted from the primary-side rectifying circuit;
a secondary-side rectifying circuit that converts AC power outputted from the secondary winding of the transformer to DC power;
a secondary-side electrolytic capacitor that smoothes the DC power outputted from the secondary-side rectifying circuit;
a tertiary-side rectifying and smoothing circuit that converts AC power outputted from the tertiary winding of the transformer to DC power and smoothes the DC power;
a switching circuit that repeatedly switches the primary winding of the transformer which inputs a voltage of the primary-side electrolytic capacitor;
a pulse width control circuit that controls the pulse width of a drive signal for controlling the switching of the switching circuit; and
an output-error detecting circuit that detects a deviation of a secondary-side DC output voltage outputted by the secondary-side rectifying circuit and the secondary-side electrolytic capacitor from a predetermined reference voltage and controls the pulse width control circuit, and that comprises a Posister,
wherein the Posister is disposed in the vicinity of the secondary-side electrolytic capacitor, and a resistance value of the Posister largely increases when the temperature of the Posister increases to reach a predetermined temperature due to heat generated by the secondary-side electrolytic capacitor, thus causing the output-error detecting circuit to stop outputting, which in turn causes the pulse width control circuit to stop providing a drive signal to the switching circuit, and then an operation of the switching power supply circuit is stopped.
